(19) Europäisches Patentamt
European Patent Office
Office européen des brevets

(11) Veröffentlichungsnummer: **0 280 144 B1**

(12) **EUROPÄISCHE PATENTSCHRIFT**

(45) Veröffentlichungstag der Patentschrift: **11.12.91**

(51) Int. Cl.[5]: **B01D 11/04**, C22B 3/00, C01G 49/00

(21) Anmeldenummer: **88102174.5**

(22) Anmeldetag: **15.02.88**

# (54) Verwendung von Citronensäure-Partialestern und deren Mischungen zur Eisenextraktion.

(30) Priorität: **23.02.87 DE 3705721**

(43) Veröffentlichungstag der Anmeldung:
**31.08.88 Patentblatt 88/35**

(45) Bekanntmachung des Hinweises auf die Patenterteilung:
**11.12.91 Patentblatt 91/50**

(84) Benannte Vertragsstaaten:
**AT BE DE ES FR GB IT NL SE**

(56) Entgegenhaltungen:
**DE-A- 2 404 185**
**DE-A- 3 225 230**
**FR-A- 2 396 573**
**US-A- 4 190 463**
**US-A- 4 280 897**

**R.BURKIN "Topics in Non-ferrous Extractive Metallurgy", Band 1, 1980, Blackwell Scientific Publications Ltd.,Oxford, A.J.MONHEMIUS:"The electrolytic production of zinc", Seiten 104-131**

(73) Patentinhaber: **Henkel Kommanditgesellschaft auf Aktien**
**Postfach 1100 Henkelstrasse 67**
**W-4000 Düsseldorf-Holthausen(DE)**

(72) Erfinder: **Buchmeier, Willi, Dr.**
**Landsberger Strasse 26**
**W-4000 Düsseldorf(DE)**
Erfinder: **Kehl, Ralf**
**Bockumer Strasse 192**
**W-4000 Düsseldorf 31(DE)**
Erfinder: **Schwab, Werner, Dr.**
**Bachstrasse 76**
**W-4018 Langenfeld(DE)**

**EP 0 280 144 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die Verwendung von Partialestern der Citronensäure und von Mischungen derartiger Citronensäure-Partialester zur selektiven Flüssig/Flüssig-Extraktion von Eisen aus wäßrigen, sauren Lösungen.

Die Gewinnung von für technische Zwecke geeignetem Zinkmetall erfolgt zum weitaus größten Anteil auf hydrometallurgischem Wege. Das Gewinnungsverfahren wird üblicherweise so geführt, daß die Zink - und in kleineren Mengen auch noch andere Metalle - enthaltenden Roherze durch Röstung entschwefelt werden. Die nach der Röstung vorliegenden Metalloxide werden hydrometallurgisch mit verdünnter Schwefelsäure in Lösung gebracht. Ein maximales Ausbringen aller im Roherz enthaltenen Wertmetalle - neben Zink auch Kupfer und Cadmium - erfordert Aufschlußbedingungen, bei denen Eisen mit aufgelöst wird. Da Eisen-Ionen jedoch die Gewinnung von Zink auf elektrolytischem Wege störend beeinflussen, sind sie aus der Zinksulfatlösung vor der Zinkelektrolyse zu entfernen.

Entsprechend den derzeit in der Technik eingesetzten Verfahren wird Eisen aus derartigen, für die Elektrolyse bestimmten Lösungen ausgefällt. Mit den derzeit eingesetzten konventionellen Verfahren wird das Eisen ausgefällt als Jarosit, als Goethit oder als Hämatit (vgl. "Ullmann's Enzyklopädie der technischen Chemie" 4. Auflage, Band 24, Seite 601 ff und Winnacker-Küchler, "Chemische Technologie", 3. Auflage, Band 6 (Metallurgie), Seite 306 ff). Derartige eisenhaltige Niederschläge fallen nach Abfiltration als Filterkuchen mit hohen Wasseranteilen (ca. 50 %) an und müssen nach gesetzlicher Vorschrift in Abhängigkeit von der Menge der darin enthaltenen Schwermetall-Verunreinigungen auf Spezialdeponien abgelagert werden. Pro Tonne hydrometallurgisch hergestelltem Zinkmetall muß erfahrungsgemäß ca. eine Tonne eisenhaltiger Schlamm entsorgt werden.

Bei der Ausfällung des Eisens als Hämatit fällt ein Produkt an, das außer Eisen keine weiteren Schwermetalle enthält. Dieses Produkt läßt sich nach A. v. Röpenack, "Erzmetall" 35, 534 (1982) bei der Stahl-bzw. Baustoffproduktion einsetzen. Nachteilig für die Ausfällung des Eisens nach dem "Hämatit-Verfahren" ist die relativ aufwendige Verfahrensweise. Die Fällung wird bei Temperaturen von 180° und einem Druck von 15 bar mit reinem Sauerstoff durchgeführt.

Abgesehen von der nur im "Hämatit-Verfahren" gegebenen Möglichkeit, die Eisenrückstände wiederzuverwenden, werden aus ökologischen Gründen Verfahren gesucht, in denen keine oder zumindest mengenmäßig weniger auf Deponien abzulagernde schwermetallhaltige Rückstände entstehen und eine Wiederaufarbeitung der eisenhaltigen Anteile der Elektrolytlösungen möglich ist. Seit längerer Zeit sind als Alternative zu den oben genannten Fällverfahren Flüssig/Flüssig-Extraktionsprozesse bekannt, durch die Eisen aus zinkhaltigen Elektrolytlösungen entfernt werden kann und sich anschließend wiedergewinnen läßt. Die meisten, zur Flüssig/Flüssig-Extraktion von Eisen aus wäßrigen Elektrolytlösungen geeigneten Verfahren ließen sich jedoch entweder wegen nicht ausreichender Selektivität der Metallabtrennung oder zu geringer Beladbarkeit der organischen Phase bei niedrigen pH-Werten in der Praxis, d.h. im industriellen Bereich, nicht realisieren. In der Praxis wird vorwiegend der sogenannte "Espindesa-Prozeß" angewendet (vgl. A. J. Monhemium "Topics In Non-Ferrous Extractive Metallurgy", R. Burkin (Ed.), Seite 104 ff; G. Thorsen, "Handbook of Solvent Extraction", T. C. Lo et al, 1983, Seite 709 ff). In diesem Prozeß wird die aus einer salzsauren Erzlaugung stammende wäßrige Lösung zuerst mit einem sekundären Amin extrahiert, wobei die Metalle Zink, Kupfer, Cadmium und Eisen als Chlorokomplexe abgetrennt werden. Nach einer Reextraktionsstufe mit Wasser wird in einem nachfolgenden Verfahrensgang $Zn^{2+}$ und $Fe^{3+}$ mit Di-(2-ethylhexylphosphorsäure) (D-2-EHPA) extrahiert. Aus den resultierenden Lösungen läßt sich in zwei aufeinanderfolgenden Kreisläufen zuerst Zink und anschließend Eisen abtrennen; die beiden Metalle werden nachfolgend in herkömmlichen Extraktionsprozessen getrennt aufgearbeitet.

Nachteilig beim Espindesa-Prozeß ist, daß die mehrstufige Verfahrensweise sowohl bei der Extraktion als auch der Reextraktion unter Einsatz unterschiedlicher Extraktionsreagenzien eine aufwendige Arbeitsweise darstellt. Es bestand daher schon seit langer Zeit ein Bedarf, neue Verfahrensweisen für die Flüssig/Flüssig-Extraktion von Eisen aus sauren wäßrigen Lösungen zur Verfügung zu stellen, die die geschilderten Nachteile des Standes der Technik nicht aufweisen.

Aus A. J. van der Zeeuw, "Hydrometallurgy" 2, 275 (1976) und der DE-PS 24 04 185 ist außerdem ein Verfahren zur Extraktion von Eisen aus zinkhaltigen wäßrigen Elektrolytlösungen mit sogenannten "Versaticsäuren" bekannt. Die Versaticsäuren enthaltend organische Phase wird vor dem Extraktionsschritt mit Röstgut behandelt ("Neutrallaugung"), wobei sich das Zinksalz der entsprechenden Versaticsäure bildet. Im nachfolgenden Extraktionsschritt wird die wäßrige, aus dem sauren Aufschuß der Neutrallaugungsrückstände stammende stark eisenhaltige Zinklösung mit der zinkbeladenen organischen Phase in Kontakt gebracht, wobei in den Versaticsäure-Salzen $Zn^{2+}$ gegen $Fe^{3+}$ ausgetauscht wird. Eine wesentliche Beschränkung ist dadurch gegeben, daß Versaticsäuren erst bei einem pH-Wert von 1,7 beginnen, Eisen

aus den wäßrigen Lösungen zu extrahieren und bei einem pH-Wert von 2,6 ihre maximale Beladung erreichen. Dies erfordert eine nicht erwünschte, starke Anhebung des pH-Wertes, die die Anwendungsbreite des genannten Extraktionsverfahrens deutlich einschränkt.

Aufgabe der vorliegenden Erfindung war es nun, Verbindungen aufzufinden, bei deren Verwendung eine Flüssig/Flüssig-Extraktion von Eisen aus neben Eisen auch andere Schwermetalle enthaltenden Elektrolytlösungen schon bei niedrigen pH-Werten bei hoher Beladung der organischen Phase mit Eisen möglich ist. Außerdem sollte eine hohe Selektivität der Extraktion von Eisen gegenüber den vorhandenen Begleitmetallen gewährleistet werden. Eine weitere Aufgabenstellung war darin zu sehen, das Eisen aus der organischen Extraktionsphase auf möglichst einfachem Wege wiederzugewinnen, um es dadurch einer Wiederverwertung zuführen zu können und damit die Kosten des Gesamtverfahrens so weit wie möglich zu senken.

Die Erfindung betrifft die Verwendung von Citronensäure-Partialestern der allgemeinen Formel (I)

$$R^1OOC - CH_2 - \underset{HO\ \ COOR^2}{\overset{}{C}} - CH_2 - COOR^3 \qquad (I)$$

in der $R^1$, $R^2$ und $R^3$ für Wasserstoff oder einen geradkettigen oder verzweigten Alkylrest mit 4 bis 20 C-Atomen oder ein Metallatom mit der Maßgabe stehen, daß mindestens einer und höchstens zwei der Reste $R^1$, $R^2$ und $R^3$ für einen derartigen Alkylrest stehen, oder Mischungen derartiger Citronensäure-Partialester der allgemeinen Formel (I) zur Extraktion von Eisen aus wäßrigen Lösungen.

Entsprechend der erfindungsgemäßen Verwendung kommen Citronensäure-Partialester oder deren Mischungen der allgemeinen Formel (I) zum Einsatz, in der $R^1$, $R^2$ und $R^3$ für Wasserstoff oder einen geradkettigen oder verzweigten Alkylrest mit 4 bis 20 C-Atomen oder ein Metallatom mit der Maßgabe stehen, daß mindestens einer und höchstens zwei der Reste $R^1$, $R^2$ und $R^3$ für einen der oben genannten Alkylreste stehen. In einer bevorzugten Ausführungsform werden Citronensäure-Partialester oder deren Mischungen der allgemeinen Formel (I) zur Eisenextraktion verwendet, in der mindestens einer, höchstens jedoch zwei der Reste $R^1$, $R^2$ und $R^3$ für einen verzweigten Alkylrest mit 4 bis 20 C-Atomen stehen und der verbleibende Rest oder die verbleibenden Reste für H oder ein Metallatom stehen. Derartige Partialester mit verzweigten Alkylresten an den in der allgemeinen Formel (I) mit $R^1$, $R^2$ oder $R^3$ bezeichneten Stellen weisen üblicherweise eine deutlich bessere Löslichkeit in organischen Lösungsmitteln auf, woraus sich ihr bevorzugter Einsatz ergibt. Als Alkylreste sind somit die geradkettigen, bevorzugt jedoch die verzweigten Alkylreste aus der Gruppe Butyl, Pentyl, Hexyl, Heptyl, Octyl, Nonyl, Decyl, Undecyl, Dodecyl, Tridecyl, Tetradecyl, Pentadecyl, Hexadecyl, Heptadecyl, Octadecyl, Nonadecyl und Eicosyl in den Citronansäure-Partialestern der allgemeinen Formel (I) geeignet, wobei sich in der Praxis gezeigt hat, daß die verzweigten Alkylreste mit 6 bis 13 C-Atomen, also Hexyl, Heptyl, Octyl, Nonyl, Decyl, Undecyl, Dodecyl und Tridecyl, besonders gut geeignet sind, also Citronensäure-Partialester der allgemeinen Formel (I) mit Vorteil zur Extraktion von Eisen aus wäßrigen Lösungen verwendet werden können, in deren allgemeiner Formel (I) mindestens einer, höchstens jedoch zwei der Reste $R^1$, $R^2$ und $R^3$ für einen der genannten verzweigten Alkylreste mit 6 bis 13 C-Atomen stehen.

Besonders bewährt hat sich der Einsatz von Citronensäure-Partialestern oder deren Mischungen der allgemeinen Formel (I), in der mindestens einer, höchstens jedoch zwei der Reste $R^1$, $R^2$ und $R^3$ für einen verzweigten Alkylrest aus der Gruppe 2-Ethylhexyl, i-Decyl, i-Dodecyl und i-Tridecyl stehen, wobei aus der Gruppe der genannten Citronensäure-Partialester derjenige die allerbeste Eignung besitzt, in dem einer oder zwei der Reste $R^1$, $R^2$ und $R^3$ für 2-Ethylhexyl stehen und der verbleibende Rest oder die beiden verbleibenden Reste für Wasserstoff oder ein Metallatom stehen. Dieser Citronensäure-Partialester oder Mischungen der Mono- und Diester mit 2-Ethylhexyl als Alkylrest in der allgemeinen Formel (I), weist bzw. weisen eine ausgezeichnete Löslichkeit in den zur Extraktion verwendeten organischen Lösungsmitteln auf und zeigen eine hohe Selektivät für die Extraktion von Eisen aus wäßrigen Lösungen. Außerdem weisen sie in dem in Frage kommenden pH-Wert-Bereich eine hohe Beladbarkeit mit Eisenionen auf und machen dadurch ihre Verwendung gegenüber anderen Partialestern der Citronensäure oder deren Mischungen besonders bevorzugt.

Die hier wie im folgenden beschriebenen, zur Verwendung in der Extraktion von Eisen aus wäßrigen Lösungen erfindungsgemäß geeigneten Citronensäure-Partialester, die zur Eisenextraktion allein oder auch in Mischungen mehrerer derartiger Ester miteinander verwendet werden können, werden nach aus dem Stand der Technik bekannten Verfahren hergestellt, beispielsweise dadurch, daß Citronensäure und einer oder mehrere Alkohole der allgemeinen Formel (II)

$R^4$-OH (II)

in der $R^4$ für einen geradkettigen oder verzweigten Alkylrest mit 4 bis 20 C-Atomen steht, in Abwesenheit oder in Gegenwart eines organischen Lösungsmittels bei erhöhter Temperatur miteinander umgesetzt werden. Die Umsetzung wird bevorzugt in Gegenwart eines organischen Lösungsmittels durchgeführt, wobei - wie ebenfalls an sich bekannt - solche Lösungsmittel bevorzugt Verwendung finden, die ein azeotropes Gemisch mit Wasser bilden und das im Zuge der Veresterungsreaktion gebildete Reaktionswasser beim Siedepunkt des azeotropen Gemisches aus der Reaktionsmischung entfernen und dadurch das Gleichgewicht der Veresterungsreaktion zu den Produkten verlagern. Als solche organischen Lösungsmittel lassen sich beispielsweise aromatische Kohlenwasserstoffe, bevorzugt die bei Temperaturen oberhalb von 140 °C siedenden Xylole, verwenden. Die erhaltenen Citronensäure-Partialester und ihre Mischungen werden nach ebenfalls an sich bekannten Verfahren gereinigt, von Lösungsmittelresten befreit und als Einzelsubstanzen oder Substanzgemische in der der Erfindung entsprechenden Art und Weise zur Extraktion von Eisen aus wäßrigen Lösungen verwendet.

Besonders bevorzugt ist gemäß der Erfindung eine Verwendungsweise der Citronensäure-Partialester der allgemeinen Formel (I) oder deren Mischungen zur Extraktion von Eisen aus wäßrigen Lösungen, bei der Partialester der allgemeinen Formel (I) zum Einsatz kommen, in der einer der Reste $R^1$, $R^2$ und $R^3$ für ein Metallatom steht. Von den Metallatomen sind bevorzugt diejenigen als Reste in der allgemeinen Formel (I) geeignet, die aus der Gruppe der säurelöslichen Nicht-Eisenmetalle stammen, die in den Ausgangserzen in gewinnbaren Mengen enthalten sind. Es können also in dieser bevorzugten Ausführungsform der erfindungsgemäßen Verwendung Citronensäure-Partialester der allgemeinen Formel (I) oder Mischungen derartiger Ester zum Einsatz kommen, in der einer der Reste für eines dieser säurelöslichen Nicht-Eisenmetalle steht, die in den Ausgangserzen in gewinnbaren Mengen enthalten sind. Bevorzugt werden solche Citronensäure-Partialester verwendet, in denen einer der Reste für ein Metallatom aus der Gruppe Zink, Cadmium und Kupfer steht. Derartige Metallionen sind in den üblicherweise zur Zinkgewinnung verwendeten Mineralien in unterschiedlichen Mengen, je nach Fundort, enthalten, üblicherweise jedoch in solchem Mengen, daß sich ihre Gewinnung auf dem einleitend beschriebenen Verfahrenswege lohnt. Bevorzugt kommen solche Citronensäure-Partialester mit Vorteil zum Einsatz, in denen einer der Reste $R^1$, $R^2$ oder $R^3$ für ein Zinkatom steht. Die Verwendung derartiger Citronensäure-Partialester ist deswegen besonders vorteilhaft, weil der Extraktionsvorgang ein Austauschvorgang zwischen den in der organischen Phase gelösten Citronensäure-Partialestern und den in der sauren, wäßrigen Phase enthaltenen Metallionen darstellt. Werden Citronensäure-Partialester eingesetzt (was entsprechend der erfindungsgemäßen Verwendung auch möglich ist), in denen einer der Reste $R^1$, $R^2$ oder $R^3$ für Wasserstoff steht, so wird der Wasserstoffrest des Citronensäure-Partialesters in der organischen Phase gegen ein Metallion aus der wäßrigen Phase ausgetauscht; die wäßrige Phase reichert sich damit immer mehr an freien $H^+$-Ionen an, wird folglich immer saurer. Zur Konstanthaltung des pH-Wertes ist es deswegen von Vorteil, einen Metall-Metall-Austausch dadurch vorzusehen, daß man den in der organischen Phase gelösten Citronensäure-Partialester in Form seines Metallsalzes, bevorzugt seines $Zn^{2+}$-Salzes einsetzt. Der eigentliche Extraktionsvorgang besteht dann in einem Austausch des $Zn^{2+}$-Ions des Citronensäure-Partialesters in der organischen Phase gegen ein $Fe^{3+}$-Ion aus der wäßrigen Phase. Es kommt damit nicht zu einer Anreicherung von Protonen in der wäßrigen Phase und damit nicht zu einer nennenswerten, das Verfahren negativ beeinflussenden Veränderung des pH-Wertes. Vielmehr wird in vorteilhafter Weise die $Zn^{2+}$-Menge in der wäßrigen Phase angereichert.

Die "Beladung" des Citronensäure-Partialesters, also der organischen Phase, mit $Zn^{2+}$-Ionen, d.h. die Überführung des freien Citronensäure-Partialesters in sein Zinksalz, erfolgt in an sich bekannter Weise, beispielsweise durch sogenannte "Neutrallaugung", wobei der in dem organischen Extraktionsmittel gelöste Citronensäure-Partialester mit Röstgut, d.h. mit Metalloxiden, behandelt wird, die aus der Röstung der als Ausgangsstoffe verwendeten zinkhaltigen Erze resultieren.

Die genannten Citronensäure-Partialester der allgemeinen Formel (I) oder deren Mischungen lassen sich erfindungsgemäß für die Extraktion von Eisen aus wäßrigen Lösungen in einem vorzugsweise sauren pH-Bereich verwenden. Der besondere Vorzug der erfindungsgemäßen Verwendung liegt jedoch darin, daß die genannten Citronensäure-Partialester oder ihre Mischungen Eisen in vorteilhafter Weise schon bei ausgesprochen niedrigen pH-Werten extrahieren, d.h. für die Eisenextraktion aus relativ stark sauren wäßrigen Lösungen geeignet sind. So sind die genannten Partialester oder ihre Mischungen schon für die Extraktion im pH-Wert-Bereich von 1,6 und niedriger geeignet. Die organischen Extraktionsmittel, die die erfindungsgemäß verwendeten Citronensäure-Partialester der allgemeinen Formel (I) oder ihre Mischungen enthalten, können schon bei derart niedrigen pH-Werten mit einer ausgesprochen großen Menge an Eisen

beladen werden. Die Eisenbeladung der organischen Phase erreicht beispielsweise bei 0,5 Mol Extraktionsreagenz enthaltenden Lösungen Werte bis zu 9 g Fe pro Liter. Die Verwendung der Partialester oder ihrer Mischungen ist dadurch besonders bevorzugt, weil sowohl ihre Selektivität als auch ihre Beladung deutlich größer ist als die anderer extrahierender Agenzien aus dem Stand der Technik.

Einen weiteren Vorteil der erfindungsgemäßen Verwendung der Citronensäure-Partialester der allgemeinen Formel (I) oder ihrer Mischungen für die Eisenextraktion aus sauren wäßrigen Lösungen kann man darin sehen, daß aus der im Extraktionsverfahren abgetrennten organischen, das Eisen enthaltenden Phase das Eisen durch einfache Absenkung des pH-Wertes entfernt werden kann. Durch Zugabe von Schwefelsäure kann also das Eisen aus der organischen Phase wieder entfernt werden. Damit läßt sich in einfacher Weise das Eisen in relativ reiner Form gewinnen und wiederverwerten. Dies bedeutet einen Vorteil gegenüber dem Stand der Technik dadurch, daß aufwendige Verfahrensschritte für das "Strippen" des Eisens in mehreren Einzelschritten vermieden werden. Durch einfache Säurezugabe läßt sich das Eisen nahezu quantitativ reextrahieren.

Ein weiterer Vorteil bei der Verwendung der Citronensäure-Partialester oder ihrer Mischungen für die Extraktion von Eisen aus wäßrigen Lösungen ist darin zu sehen, daß die üblicherweise zur Verbesserung des Phasentrennverhaltens oder der Kinetik eingesetzten sogenannten "Modifier" entbehrlich sind. Bei Zusatz der erfindungsgemäß verwendeten Citronensäure-Partialester zu den üblicherweise eingesetzten organischen Lösungsmitteln wird ein optimales, von der verwendeten Konzentration abhängiges Phasentrennverhalten beobachtet. Durch die schnelle Kinetik des Extraktions-/Reextraktionsvorganges wird die Gleichgewichtseinstellung schon nach kurzer Zeit erreicht. Zudem neigen die beiden Phasen nicht zur Bildung von Emulsionen oder zur Bildung einer den Metall-Extraktionsmittel-Komplex enthaltenden dritten Phase. Diese - üblicherweise durch den Zusatz der Modifier (wie z.B. Nonylphenol oder Tri-decanol) verminderten - Probleme treten bei der erfingungsgemäßen Verwendung der Citronensäure-Partialester der allgemeinen Formel (I) oder ihrer Mischungen nicht auf. Es ist jedoch grundsätzlich auch möglich, Modifier - wie aus dem Stand der Technik bekannt - zu verwenden; üblicherweise ist jedoch das Phasentrennverhalten der Einzelphasen bei Verwendung der Citronensäure-Partialester so gut, daß auf einen Modifier verzichtet werden kann.

Erfindungsgemäß besonders bevorzugt ist die Verwendung der Citronensäure-Partialester der allgemeinen Formel (I) oder ihrer Mischungen zur Extraktion von Eisen aus sauren wäßrigen Lösungen mit Hilfe organischer Lösungsmittel oder Lösungsmittelgemische. Derartige Lösungsmittel bzw. Lösungsmittelgemische sind für diesen Zweck ebenfalls aus dem Stand der Technik bekannt. Üblicherweise handelt es sich dabei um aliphatische und/oder aromatische Kohlenwasserstoffe oder Kohlenwasserstoffgemische. Aus Sicherheitsgründen werden dabei üblicherweise hochsiedende, d.h. einen hohen Flammpunkt aufweisende Kohlenwasserstoffe oder ihre Gemische verwendet, die mehr oder weniger große Anteile aromatischer Kohlenwasserstoffe enthalten. Beispielsweise lassen sich Kerosine als Lösungsmittelgemische verwenden, die unter dem Namen Escaid®, Solvesso® und Kermac® im Handel erhältlich sind. Es lassen sich jedoch auch andere Kohlenwasserstoffe für die Extraktion verwenden. So werden beispielsweise auch mit chlorierten Kohlenwasserstoffen, wie z.B. Trichlorethylen, gute Erfolge erzielt. Die erfindungsgemäß verwendeten Citronensäure-Partialester der allgemeinen Formel (I) oder ihre Mischungen sind mit den genannten organischen Lösungsmitteln in jedem Verhältnis mischbar. Es hat sich jedoch als vorteilhaft erwiesen, 0,01 bis 1,5 Mol/l Lösungen in den organischen Lösungsmitteln zu verwenden, wobei hinsichtlich des Phasentrennverhaltens und der Viskosität 0,4 bis 0,6 Mol/l, bevorzugt 0,5 Mol/l Lösungen besonders geeignet sind.

Vorteilhaft bei der erfindungsgemäßen Verwendung der Citronensäure-Partialester der allgemeinen Formel (I) und ihrer Mischungen ist auch, daß die genannten Verbindungen im stark sauren pH-Bereich gegen Hydrolyse hinreichend stabil sind.

Die Erfindung wird durch die nachfolgenden Beispiele näher erläutert.

Beispiel 1

Herstellung eines Citronensäure-Partialesters der allgemeinen Formel (I)
(I; $R^1$ = $R^3$ = 2-Ethylhexyl; $R^2$ = H)

576,3 g (3 Mol) Citronensäure und 780,0 g (6 Mol) 2-Ethylhexanol (II; $R^4$ = 2-Ethylhexyl) wurden mit 400 ml Xylol in einem Kolben, der mit einem Wasserabscheider bestückt war, auf 125 bis 170 °C erhitzt. Im Verlaufe der Veresterungsreaktion schieden sich 110 ml $H_2O$ ab. Nach Beendigung der Reaktion wurde das Lösungsmittel weitgehend abdestilliert. Das Rohprodukt wurde mit 1,5 l Petrolether versetzt und anschließend je zweimal mit 500 ml 10 %iger Schwefelsäure sowie anschließend mit 500 ml destilliertem Wasser gewaschen. Die organische Phase wurde bei 80 bis 90 °C und ca. 2000 Pa Druck (Wasserstrahlvakuum)

von Lösungsmitteln befreit. Es wurde eine hellgelbe, viskose, klare Flüssigkeit erhalten.

Ausbeute: 1185 g (2,85 Mol, entsprechend 95 % der theoretischen Ausbeute).

Charakterisierung:

In der nachfolgenden Tabelle 1 sind die Kenndaten des gereinigten Reaktionsproduktes aufgeführt.

Beispiel 2

Die Herstellung des der Verbindung des Beispiels 1 entsprechenden Citronensäure-(isodecyl-)partialesters (I; $R^1$ = $R^3$ = Isodecyl; $R^2$ = H) erfolgte entsprechend der in Beispiel 1 angegebenen Verfahrensweise. Die Charakterisierung des Produktes ergab die in der nachfolgenden Tabelle 1 angegebenen Werte.

Tabelle 1

| Charakterisierung der gemäß Beispiel 1 und 2 hergestellten Citronensäure-Partialester (berechnete Werte in Klammern) | | |
|---|---|---|
| Eigenschaft | Prod. aus Bsp. 1 | Prod. aus Bsp. 2 |
| $n_D^{20}$ | 1,460 | 1,461 |
| Dichte (g.cm$^{-3}$) | 1,001 | 1,029 |
| Säurezahl (SZ) | 101,7 (118,7) | 121,2 (134,9) |
| Verseifungszahl (VZ) | 342,6 (356,1) | 394,3 (404,6) |

Beispiel 3

Zur Bewertung der Extraktion unter Praxisbedingungen wurden Extraktionsisothermen (McCabe-Thiele-Diagramme) bei verschiedenen, konstant gehaltenen pH-Werten aufgenommen. Hierzu wurden Lösungsmittel (Kerosine wie z.B. Escaid$^R$) , in denen die gemäß den Beispielen 1 und 2 hergestellten Citronensäure-Partialester gemäß der allgemeinen Formel (I) gelöst waren (0,5 Mol/l Lösungen) und Praxiselektrolyt (Zusammensetzung: 80 g/l Zn, 21 g/l Fe, 7,2 g/l Mn, 0,6 g/l Cu und 0,2 g/l Cd; freie Schwefelsäure: ca. 40 g/l) miteinander in Kontakt gebracht. Das Verhältnis organische Phase : anorganische Phase (O/A-Verhältnis) lag dabei zwischen 10 : 1 und 1 : 10. Nach erfolgter Phasentrennung wurden die Metallgehalte in der organischen und in der wäßrigen Phase bestimmt und gegeneinander in einem Diagramm aufgetragen.

Fig. 1 zeigt die Extraktionsisotherme bei Verwendung des Produktes des Beispiels 1 (Konzentration: 0,5 Mol in Escaid 100®) bei einem konstanten pH-Wert von 1,6 (pH-Einstellung mit NaOH), einem O/A-Verhältnis von 2,3 und einer Ausgangskonzentration von 18,4 g Fe pro Liter wäßrige Phase.

Fig. 2 zeigt die Extraktionsisotherme bei Verwendung des Produktes aus Beispiel 2 (Konzentration: 0,5 Mol in Escaid 100®) bei einem konstanten pH-Wert von 1,6, pH-Wert-Einstellung mit NaOH, bei einem O/A-Verhältnis von 2,5 und einer Ausgangskonzentration an Fe von 17,8 g/l in der wäßrigen Phase.

Ergebnis:

Aus den Fig. 1 und 2 ist zu erkennen, daß sich bei einem O/A-Verhältnis im Bereich von 2,3 bis 2,5 die Fe-Konzentrationen des "Praxiselektrolyten" von ca. 18 g/l auf etwa 1 bis 2 g/l in drei Stufen absenken ließen. Die beladene organische Phase wies dann eine Fe-Konzentration im Bereich von 8 g/l auf, was nahe an der oberen Grenze der beobachteten maximalen Beladung der organischen, den jeweiligen Citronensäure-Partialester der allgemeinen Formel (I) enthaltenden Phase lag.

Beispiel 4

Die Extraktionsversuche des Beispiels 3 wurden beim O/A-Verhältnis 1 : 1 mit unterschiedlichen Reagenzkonzentrationen der Citronensäure-Partialester der allgemeinen Formel (I) wiederholt. Hierbei wurde der pH-Wert während der Extraktion nicht konstant gehalten. Die Einsatzkonzentrationen der Verbindung

des Beispiels 1 in Escaid $100^R$ betrugen:

(a) 0,1 Mol/l
(b) 0,5 Mol/l
(c) 1,0 Mol/l

Von der Verbindung des Beispiels 1 wurden in Escaid $100^R$ zusätzlich zur Abgrenzung

(d) 0,5 Mol/l

bei einem konstanten pH-Wert von 1,6 eingesetzt.

Bei allen in der nachfolgenden Tabelle 2 aufgezeigten Versuchen wurde in der organischen Phase keine Zink-Beladung (<0,1 g Zn/l) festgestellt. Die sich vor und nach der Extraktion ergebenden Schwankungen der Zink-Konzentration sind durch das Experiment bedingt.

Tabelle 2

Ergebnisse der Extraktion (Beispiel 4)

| Bsp. 4 | Konz. (g/l) an Metall i.d. jeweiligen Phase | | | | | |
|---|---|---|---|---|---|---|
| | wäßr.Phase vor Extr. | | wäßr.Phase nach Extr. | | org.Phase | % Fe extr. |
| | Zn | Fe | Zn | Fe | Fe | |
| a) | 76,8 | 18,0 | 76,9 | 16,5 | 1,5 | 8,3 |
| b) | 74,4 | 17,4 | 76,4 | 13,3 | 4,8 | 27,6 |
| c) | 75,0 | 17,5 | 72,1 | 10,9 | 6,3 | 36,0 |
| d) | 76,3 | 17,8 | 69,0 | 10,4 | 7,9 | 44,4 |

Beispiel 5

Bevorzugt wird die gemäß den Beispielen 3 und 4 üblicherweise auftretende und durch Zusatz von Natronlauge kompensierte Verschiebung des pH-Wertes bei der Extraktion des Eisens dadurch vermieden, daß man den Extraktanden, d.h. den Citronensäure-Partialester, vor der Extraktion durch Behandlung mit Röstgut bei einem pH-Wert von ca. 3,4 so mit $Zn^{2+}$ belädt, so daß bei der anschließenden Extraktion Eisen gegen Zink und nicht gegen Protonen ausgetauscht wird. Eine weitere Kontrolle des pH-Wertes entfällt somit. Vor der eigentlichen Extraktion wird also der jeweilige Citronensäure-Partialester, in dem einer der Reste $R^1$, $R^2$ oder $R^3$ für Wasserstoff steht, in das jeweilige $Zn^{2+}$-Salz überführt, in dem der jeweilige Rest dann für ein halbes Äquivalent $Zn^{2+}$ steht.

Fig. 3 zeigt die Extraktionsisotherme des vor der Extraktion mit 12,8 g Zn pro Liter beladenen Partialesters des Beispiels 1 (Konzentration: 0,5 Mol/l in Escaid 100®). Der Ausgangs-pH-Wert betrug 1,6 und wurde während des Extraktionsvorgangs nicht weiter korrigiert.

Ergebnis:

Wie aus Fig. 3 zu entnehmen ist, läßt sich die Eisenkonzentration des Praxiselektrolyten in drei Stufen von 17,8 g/l auf ca. 0,7 g/l absenken, wenn ein O/A-Verhältnis von 2,5 eingehalten wird. Die organische Escaid®-Phase nimmt dabei 8 g Eisen pro Liter auf. Die simultan mit der Extraktionsisotherme aufgenommene Reextraktionsisotherme für Zn (Fig. 4) zeigt, daß unter den angegebenen Bedingungen ein vollkommener Austausch des $Zn^{2+}$ im Extraktanden durch $Fe^{3+}$ stattfindet. Bei anschließender Reextraktion wird ein Zn-freies Eisensalz des Partialesters des Beispiels 1 erhalten.

Beispiel 6

Eine mit Eisen beladene organische Phase (Verbindung des Beispiels 1; Konzentration: 0,5 Mol/l in Escaid $100^R$; pH = 1,6 beladen mit 9,1 g Fe/l) wurde von der wäßrigen Phase in der oben beschriebenen Weise getrennt und zur Reextraktion des Eisens mit Schwefelsäure behandelt. Die Ergebnisse sind der nachfolgenden Tabelle 3 zu entnehmen.

Tabelle 3

| Reextraktion der organischen Phase mit $H_2SO_4$ (Bsp. 6) | | |
|---|---|---|
| Konz. $H_2SO_4$ (Mol/l) | Konz. an Fe i.d. Org. Phase nach $H_2SO_4$-Be-handlung (g Fe/l) | % Reextraktion |
| 0,1 | 7,2 | 21 |
| 0,5 | 3,5 | 62 |
| 1,0 | 1,8 | 80 |

Beispiel 7

Ein Beispiel für eine Reextraktionsisotherme ist in Fig. 5 dargestellt. In der zugrunde liegenden Versuchsanordnung wurde mit 2-molarer Schwefelsäure in drei Stufen eine mit 10,3 g Eisen pro Liter beladene organische Phase (Partialester des Beispiels 1; Konzentration: 0,5 Mol/l in Escaid $100^R$, beladen bei pH = 1,6; O/A-Verhältnis 5,8) nahezu vollständig von Eisen befreit. Die Eisenkonzentration in der resultierenden, schwefelsauren wäßrigen Phase würde dann etwa 60 g Eisen pro Liter betragen.

## Patentansprüche

1. Verwendung von Citronensäure-Partialestern der allgemeinen Formel (I)

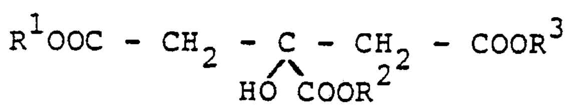

(I)

in der $R^1$, $R^2$ und $R^3$ für Wasserstoff oder einen geradkettigen oder verzweigten Alkylrest mit 4 bis 20 C-Atomen oder ein Metallatom mit der Maßgabe stehen, daß mindestens einer und höchstens zwei der Reste $R^1$, $R^2$ und $R^3$ für einen derartigen Alkylrest stehen, oder Mischungen derartiger Citronensäure-Partialester der allgemeinen Formel (I) zur Extraktion von Eisen aus wäßrigen Lösungen.

2. Verwendung nach Anspruch 1, dadurch gekennzeichnet, daß Citronensäure-Partialester der allgemeinen Formel (I) oder deren Mischungen zur Einsatz kommen, in der mindestens einer, höchstens zwei der Reste $R^1$, $R^2$ und $R^3$ für einen verzweigten Alkylrest mit 4 bis 20 C-Atomen stehen und der verbleibende Rest oder die verbleibenden Reste für H oder ein Metallatom stehen.

3. Verwendung nach Ansprüchen 1 und 2, dadurch gekennzeichnet, daß Citronensäure-Partialester der allgemeinen Formel (I) oder deren Mischungen zum Einsatz kommen, in der mindestens einer, höchstens zwei der Reste $R^1$, $R^2$ und $R^3$ für einen verzweigten Alkylrest mit 6 bis 13 C-Atomen stehen.

4. Verwendung nach Ansprüchen 1 bis 3, dadurch gekennzeichnet, daß Citronensäure-Partialester der allgemeimen Formel (I) oder deren Mischungen zum Einsatz kommen, in der mindestens einer, höchstens zwei der Reste $R^1$, $R^2$ und $R^3$ für einen verzweigten Alkylrest aus der Gruppe 2-Ethylhexyl, i-Decyl, i-Dodecyl und i-Tridecyl stehen.

5. Verwendung nach Anspruch 4, dadurch gekennzeichnet, daß Citronensäure-Partialester der allgemeinen Formel (I) oder deren Mischungen zum Einsatz kommen, in der mindestens einer, höchstens zwei der Reste $R^1$, $R^2$ und $R^3$ für 2-Ethylhexyl stehen.

6. Verwendung nach Anspruch 1, dadurch gekennzeichnet, daß Citronensäure-Partialester der allgemeinen Formel (I) oder deren Mischungen zum Einsatz kommen, in der einer der Reste $R^1$, $R^2$ und $R^3$ für ein Metallatom aus der Gruppe der säurelöslichen Nicht-Eisenmetalle steht, die in den Ausgangserzen in gewinnbaren Mengen enthalten sind.

7. Verwendung nach Ansprüchen 1 und 6, dadurch gekennzeichnet, daß Citronensäure-Partialester der allgemeinen Formel (I) oder deren Mischungen zum Einsatz kommen, in der einer der Reste $R^1$, $R^2$ und $R^3$ für ein Metallatom aus der Gruppe Zn, Cd und Cu steht.

8. Verwendung nach Ansprüchen 1, 6 und 7, dadurch gekennzeichnet, daß Citronensäure-Partialester der allgemeinen Formel (I) oder deren Mischungen zum Einsatz kommen, in der einer der Reste $R^1$, $R^2$ und $R^3$ für ein Zn-Atom steht.

9. Verwendung nach Ansprüchen 1 bis 8, dadurch gekennzeichnet, daß die Citronensäure-Partialester der allgemeinen Formel (I) zur Extraktion von Eisen aus sauren wäßrigen Lösungen zum Einsatz kommen.

10. Verwendung nach Ansprüchen 1 bis 9, dadurch gekennzeichnet, daß die Citronensäure-Partialester der allgemeinen Formel (I) oder Mischungen derartiger Ester zur Extraktion von Eisen aus sauren wäßrigen Elektrolytlösungen mit Hilfe organischer Extraktionsmittel oder Extraktionsmittelgemische zum Einsatz kommen.

11. Verwendung nach Ansprüchen 1 bis 10, dadurch gekennzeichnet, daß die Citronensäure-Partialester der allgemeinen Formel (I) oder Mischungen derartiger Ester in Konzentrationen von 0,01 bis 1,5 Mol/l im organischen Lösungsmittel, vorzugsweise von 0,4 bis 0,6 Mol/l, zum Einsatz kommen.

## Claims

1. The use of citric acid partial esters corresponding to the following general formula

$$R^1OOC - CH_2 - \underset{HO \quad COOR^2}{\overset{}{C}} - CH_2 - COOR^3 \qquad (I)$$

in which $R^1$, $R^2$ and $R^3$ represent hydrogen or a straight-chain or branched $C_{4-20}$ alkyl radical or a metal atom, with the proviso that at least one and at most two of the substituents $R^1$, $R^2$ and $R^3$ represent such an alkyl radical, or of mixtures of the citric acid partial esters corresponding to formula (I) for the extraction of iron from aqueous solutions.

2. The use claimed in claim 1, characterized in that citric acid partial esters or mixtures thereof corresponding to general formula (I), in which at least one, but at most two of the substituents $R^1$, $R^2$ and $R^3$ is/are a branched $C_{4-20}$ alkyl radical and the remaining substituent or remaining substituents represent(s) H or a metal atom, are used.

3. The use claimed in claims 1 and 2, characterized in that citric acid partial esters or mixtures thereof corresponding to general formula (I), in which at least one, but at most two of the substituents $R^1$, $R^2$ and $R^3$ represent(s) a branched $C_{6-13}$ alkyl radical, are used.

4. The use claimed in claims 1 to 3, characterized in that citric acid partial esters or mixtures thereof corresponding to general formula (I), in which at least one, but at most two of the substituents $R^1$, $R^2$ and $R^3$ represent(s) a branched alkyl radical from the group consisting of 2-ethylhexyl, i-decyl, i-dodecyl and i-tridecyl, are used.

5. The use claimed in claim 4, characterized in that citric acid partial esters or mixtures thereof corresponding to general formula (I), in which at least one, but at most two of the substituents $R^1$, $R^2$ and $R^3$ represent(s) 2-ethylhexyl, are used.

6. The use claimed in claim 1, characterized in that citric acid partial esters or mixtures thereof corresponding to general formula (I), in which one of the substituents $R^1$, $R^2$ and $R^3$ is a metal atom from the group comprising acid-soluble non-ferrous metals which are present in recoverable quantities in the starting ores, are used.

7. The use claimed in claims 1 and 6, characterized in that citric acid partial esters or mixtures thereof corresponding to general formula (I), in which one of the substituents $R^1$, $R^2$ and $R^3$ is a metal atom from the group comprising Zn, Cd and Cu, are used.

8. The use claimed in claims 1, 6 and 7, characterized in that citric acid partial esters or mixtures thereof corresponding to general formula (I), in which one of the substituents $R^1$, $R^2$ and $R^3$ is a Zn atom, are used.

9. The use claimed in claims 1 to 8, characterized in that the citric acid partial esters corresponding to general formula (I) are used for the extraction of iron from acidic aqueous solutions.

10. The use claimed in claims 1 to 9, characterized in that the citric acid partial esters corresponding to general formula (I) or mixtures thereof are used for the extraction of iron from acidic aqueous electrolyte solutions using organic extractants or extractant mixtures.

11. The use claimed in claims 1 to 10, characterized in that the citric acid partial esters corresponding to general formula (I) or mixtures thereof are used in concentrations of from 0.01 to 1.5 mol/l in the organic solvent and preferably in concentrations of from 0.4 to 0.6 mol/l.

## Revendications

1. Utilisation d'esters partiels d'acide citrique de formule générale (I) :

```
R¹OOC - CH₂ - C - CH₂ - COOR³        (I)
              / \
            HO   COOR²
```

dans laquelle $R^1$, $R^2$ et $R^3$ représentent un atome d'hydrogène ou un radical alkyle à chaîne droite ou ramifiée ayant de 4 à 20 atomes de carbone, ou un atome métallique, étant entendu qu'au moins un et au maximum deux des radicaux $R^1$, $R^2$ et $R^3$ représente(nt) un radical alkyle de ce type, ou de mélanges de tels esters partiels d'acide citrique de formule générale (I), pour l'extraction du fer hors de solutions aqueuses.

2. Utilisation selon la revendication 1, caractérisée en ce que l'on utilise des esters partiels d'acide citrique de formule générale (I), ou des mélanges de ceux-ci, dans lesquels au moins un et au maximum deux des radicaux $R^1$, $R^2$ et $R^3$ représente(nt) un radical alkyle ramifié ayant de 4 à 20 atomes de carbone, et le radical restant ou les radicaux restants représente(nt) H ou un atome métallique.

3. Utilisation selon la revendication 1 ou 2, caractérisée en ce que l'on utilise des esters partiels d'acide citrique de formule générale (I) ou des mélanges de ceux-ci, dans lesquels au moins un et au maximum deux des radicaux $R^1$, $R^2$ et $R^3$ représente(nt) un radical alkyle ramifié ayant de 6 à 13 atomes de carbone.

4. Utilisation selon l'une quelconque des revendications 1 à 3, caractérisée en ce que l'on utilise des esters partiels d'acide citrique de formule générale (I), ou des mélanges de ceux-ci, dans lesquels au moins un et au maximum deux des radicaux $R^1$, $R^2$ et $R^3$ représente(nt) un radical alkyle ramifié choisi parmi les radicaux 2-éthylhexyle, isodécyle, isododécyle et isotridécyle.

5. Utilisation selon la revendication 4, caractérisée en ce que l'on utilise des esters partiels d'acide citrique de formule générale (I), ou des mélanges de ceux-ci, dans lesquels au moins un et au maximum deux des radicaux $R^1$, $R^2$ et $R^3$ représente(nt) le radical 2-éthylhexyle.

6. Utilisation selon la revendication 1, caractérisée en ce que l'on utilise des esters partiels d'acide citrique de formule générale (I) ou des mélanges de ceux-ci, dans lesquels l'un des radicaux $R^1$, $R^2$ et $R^3$ représente un atome métallique choisi parmi les métaux non ferreux solubles dans les acides, qui sont contenus en quantités extractibles dans les minerais de départ.

7. Utilisation selon l'une quelconque des revendications 1 à 6, caractérisée en ce que l'on utilise des esters partiels d'acide citrique de formule générale (I), ou des mélanges de ceux-ci, dans lesquels l'un des radicaux $R^1$, $R^2$ et $R^3$ représente un atome métallique choisi parmi Zn, Cd et Cu.

8. Utilisation selon l'une quelconque des revendications 1, 6 et 7, caractérisée en ce que l'on utilise des esters partiels d'acide citrique de formule générale (I), ou des mélanges de ceux-ci, dans lesquels les radicaux $R^1$, $R^2$ et $R^3$ représente un atome de Zn.

9. Utilisation selon l'une quelconque des revendications 1 à 8, caractérisée en ce que l'on utilise des esters partiels d'acide citrique de formule générale (I) pour l'extraction du fer hors de solutions aqueuses acides.

10. Utilisation selon l'une quelconque des revendications 1 à 9, caractérisée en ce que l'on utilise des esters partiels d'acide citrique de formule générale (I) ou des mélanges de tels esters pour l'extraction du fer hors de solutions aqueuses acides d'électrolytes, à l'aide d'agents d'extraction ou de mélanges d'agents d'extraction organiques.

11. Utilisation selon l'une quelconque des revendications 1 à 10, caractérisée en ce que l'on utilise des esters partiels d'acide citrique de formule générale (I), ou des mélanges de tels esters, à des concentrations de 0,01 à 1,5 mole/l, de préférence de 0,4 à 0,6 mole/l, dans des solvants organiques.

FIG. 1

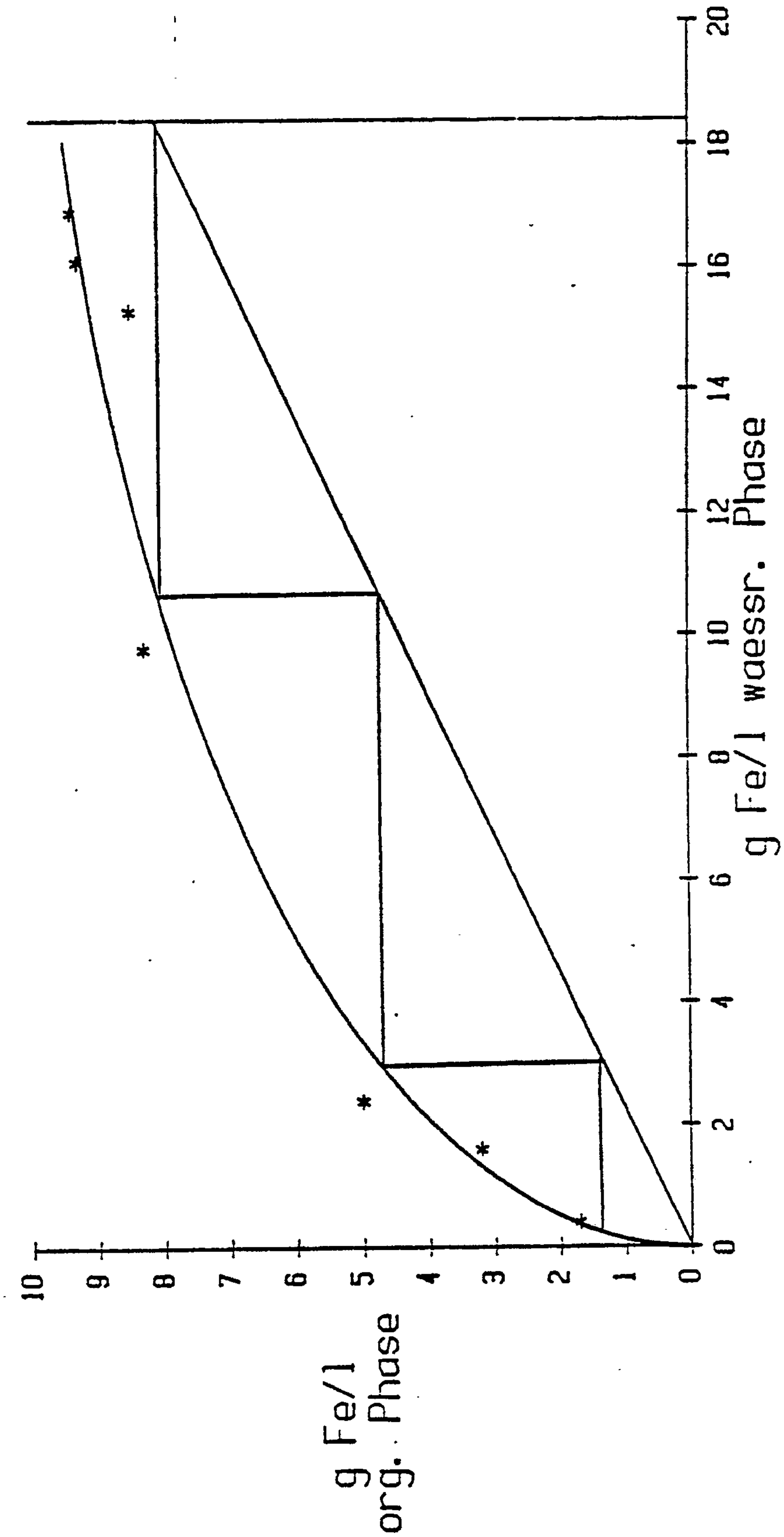
g Fe/l org. Phase
0
1
2
3
4
5
6
7
8
9
10
g Fe/l waessr. Phase
0
2
4
6
8
10
12
14
16
18
20

FIG. 2

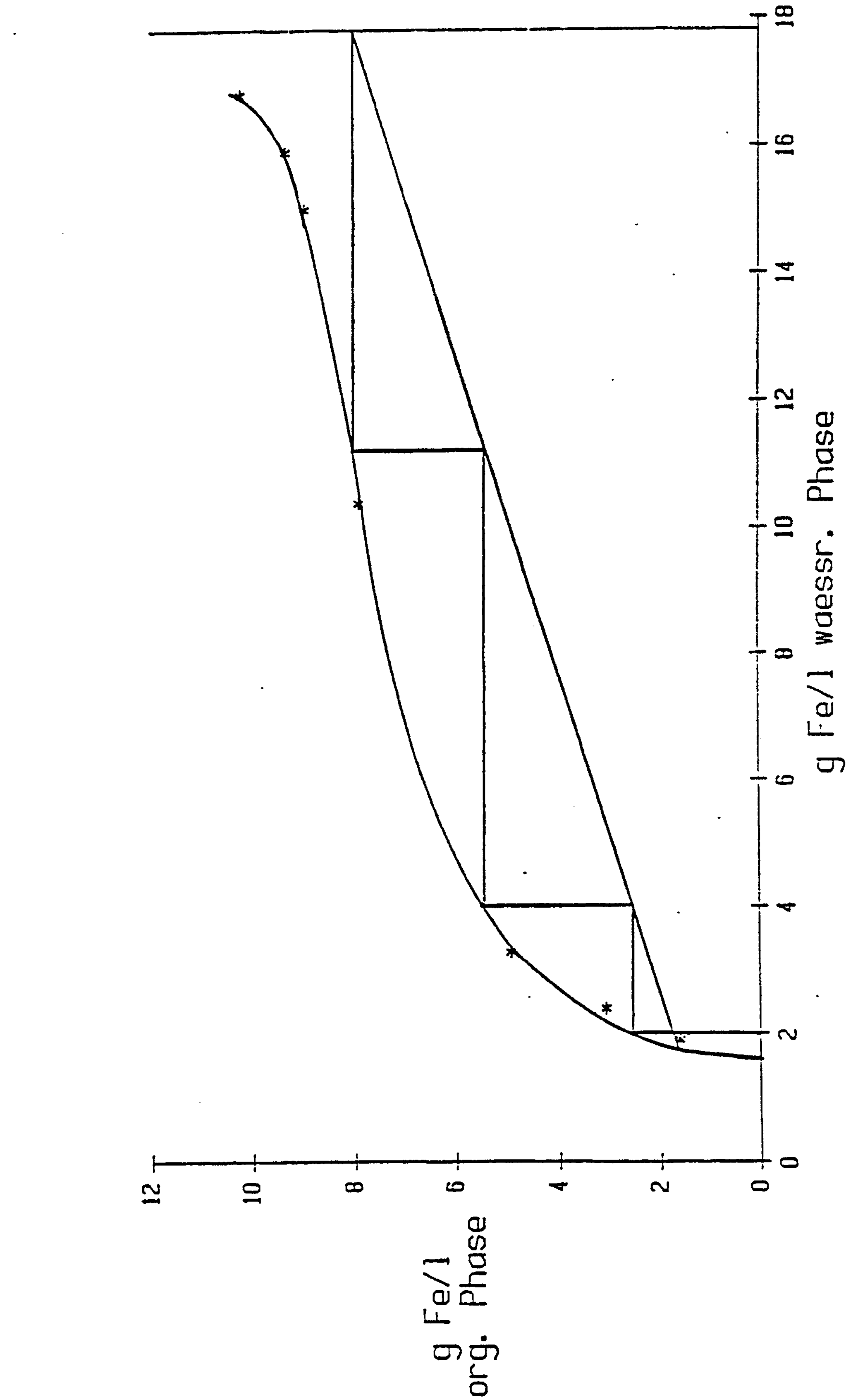
0
2
4
6
8
10
12
14
16
18
g Fe/l waessr. Phase
0
2
4
6
8
10
12
g Fe/l
org. Phase

FIG. 3

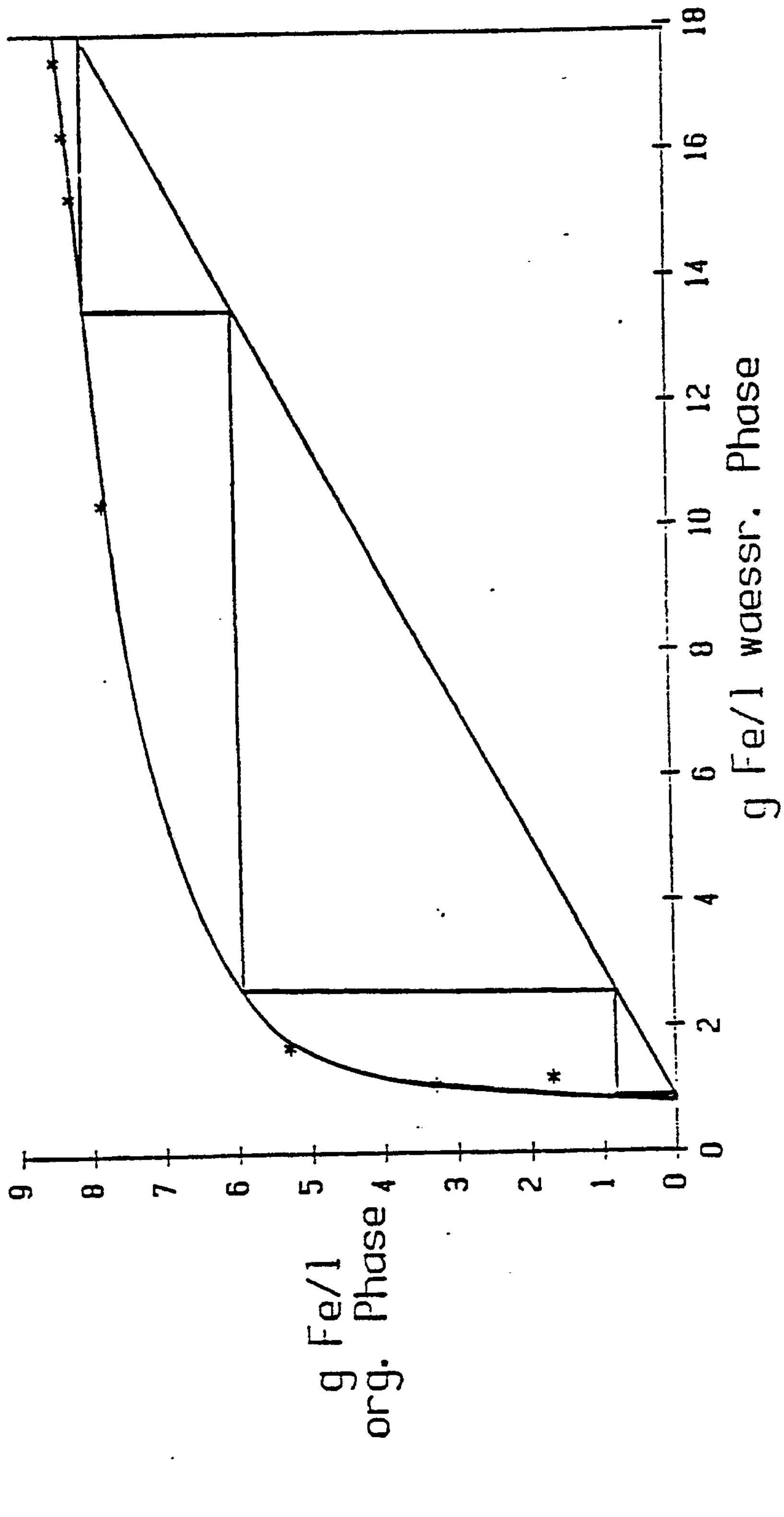
g Fe/l org. Phase
g Fe/l waessr. Phase
0
1
2
3
4
5
6
7
8
9
0
2
4
6
8
10
12
14
16
18

FIG. 4

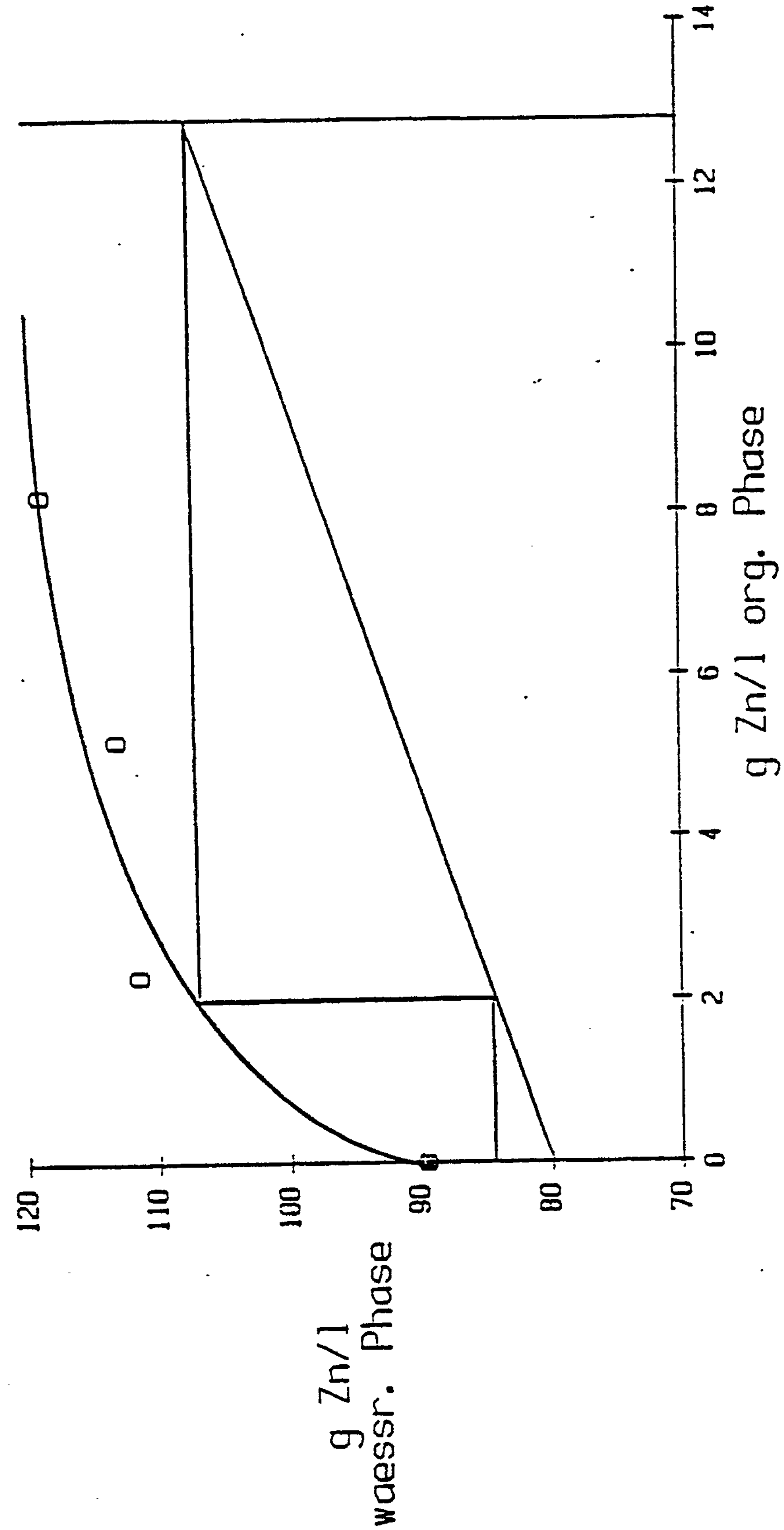
120
110
100
90
80
70
g Zn/l
waessr. Phase
0
2
4
6
8
10
12
14
g Zn/l org. Phase

FIG. 5

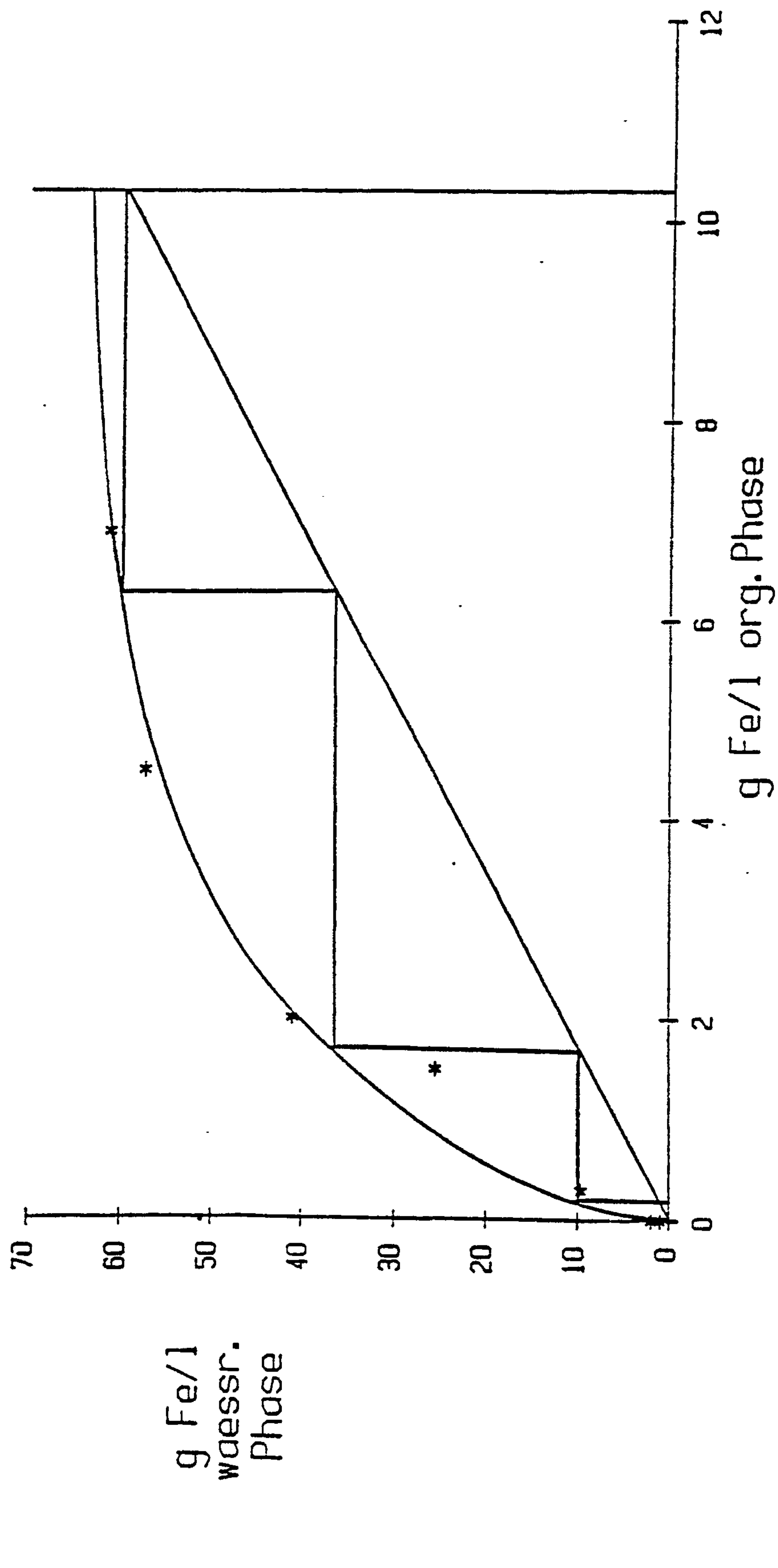
g Fe/l
waessr.
Phase
g Fe/l org. Phase
0
10
20
30
40
50
60
70
0
2
4
6
8
10
12